# EUROPEAN PATENT SPECIFICATION

(11) **EP 1 580 547 B1**
(45) Date of publication and mention of the grant of the patent: **17.06.2009**
(21) Application number: 05251552.5
(22) Date of filing: 15.03.2005
(51) Int. Cl.: G01N 27/414

(54) **Fluid sensor and methods**
Flüssigkeitssensor und Verfahren
Capteur de fluides et procédé

(30) Priority: 23.03.2004 US 807932
(43) Date of publication of application: 28.09.2005
(73) Proprietor: HEWLETT-PACKARD DEVELOPMENT COMPANY, L.P., Houston, TX 77070 (US)
(72) Inventor: Wei, Qingqiao, Corvallis, OR 97330 (US)
(74) Representative: Jackson, Richard Eric

(56) References cited:
- WO-A-02/48701
- BRADLEY K ET AL: "INFLUENCE OF MOBILE IONS ON NANOTUBE BASED FET DEVICES" NANO LETTERS, ACS, WASHINGTON, DC, US, vol. 3, no. 5, May 2003 (2003-05), pages 639-641, XP008043678 ISSN: 1530-6984
- STAR A ET AL: "INTERACTION OF AROMATIC COMPOUNDS WITH CARBON NANOTUBES: CORRELATION TO THE HAMMETT PARAMETER OF THE SUBSTITUENT AND MEASURED CARBON NANOTUBE FET RESPONSE" NANO LETTERS, ACS, WASHINGTON, DC, US, vol. 3, no. 10, October 2003 (2003-10), pages 1421-1423, XP008043675 ISSN: 1530-6984
- JING LI ET AL: "Carbon nanotube sensors for Gas and Organic Vapor Detection" NANO LETTERS, ACS, WASHINGTON, DC, US, vol. 3, no. 7, 13 June 2003 (2003-06-13), pages 929-933, XP002333732 ISSN: 1530-6984

## Description

### TECHNICAL FIELD

This invention relates generally to fluid sensor devices and methods for their fabrication.

### BACKGROUND

Many gas sensors require elevated temperatures for their proper operation (e.g., 100°-200° C). Power consumption required for heating such traditional gas sensors is high because of the relative large volume of material used, either in bulk form or film form. On the other hand, gas sensitivity of these sensors is limited because of the limited surface area available for gas adsorption. The low sensitivity and high power consumption limit their applications.

Nano-scale sensors are used in a large number of applications and have been found particularly useful in the fields of chemical and/or biological sensing and analysis. Such nano-scale sensors have typically been produced individually by non-repetitive (and therefore inefficient) methods that do not use batch processing manufacturing techniques. Nano-scale sensors find application in such analysis techniques as gas chromatography, ion-coupled plasma atomic analysis (ICPAA), wet chemical analysis, PCR (polymerase chain reaction) analysis, electrophoresis, fluorescent tagging methods, and mass spectroscopy by laser volatilization.

Chemical and/or biological sensing and analysis traditionally require a long time to obtain meaningful data, involve remote or cumbersome equipment, require large sample sizes, demand highly trained users, and involve significant direct and indirect costs. Direct costs relate to the labor, procedures, and equipment required for each type of analysis. Indirect costs partially accrue from the delay time before actionable information can be obtained, e.g., in medical analyses or in the monitoring of chemical processes. Indirect costs of certain chemical or biological analyses can outweigh the direct costs.

Certain embodiments of biological and/or chemical analysis equipment use loose cylindrical wires or tubes whose electrical resistance is measured using a two terminal configuration. The term "loose" indicates that the wire or tube is not initially secured to the substrate and so must subsequently be affixed to it. Advantages of the loose tube type of construction of sensors are simplicity and ease of laboratory demonstration. Minute wires can also be deposited directly on a substrate by a chemical vapor deposition (CVD) process which is also time consuming. However, it is difficult and expensive to manufacture loose nanoscale wires or tubes in a sufficiently reproducible way for useful sensing applications.

Some analytical techniques also require arrays of sensors. Such arrays may be used to sense some parameter over a two-dimensional or three-dimensional configuration or to sense various parameters simultaneously in a common location. It is difficult to fabricate loose tubes or wires into arrays in large quantities, especially when the tubes or wires have nano-scale dimensions. It is time-consuming and expensive to assemble wires or tubes individually into an array of sensors.

Bradley K. et al: "Influence of Mobile Ions on Nanotube Based FET Devices", Nano Letters, 2003, Vol. 3, No. 5, 639-641, discloses carbon nanotube field-effect transistors which exhibit a small hysteresis effect.

Star A. et al: "Interaction of Aromatic Compounds with Carbon Nanotubes: Correlation to the Hammett Parameter of the Substituent and Measured Carbon Nanotube FET Response", Nano Letter, 2003, Vol. 3, No. 10, 1421-1423, discloses the use of FET devices with semiconducting single-walled carbon nanotubes as the conducting channels.

WO 02/48701 A2 discloses electrical devices, including nanodetector devices, comprised of nanowires and nanotubes in which the surfaces of the nanowires are selectively functionalised.

Jing Li et al: "Carbon Nanotube Sensors for Gas and Organic Vapor Detection", Nano Letter, 2003, Vol. 3, No. 7, 929-933, discloses a sensor fabricated by the casting of single walled carbon nanotubes on an interdigitated electrode for gas and organic vapour detection at room temperature.

EP 0 740 151 A1 discloses a chemical probe field effect transistor for measuring the surface potential of a gate electrode.

There is therefore a need for efficient methods for manufacturing nano-scale fluid sensors in a less expensive, more reproducible, and more production-friendly manner than permitted by present-day techniques.

### BRIEF DESCRIPTION OF THE DRAWINGS

The features and advantages of the disclosure will readily be appreciated by persons skilled in the art from the following detailed description when read in conjunction with the drawings, wherein:
FIG. 1 is a side elevation cross-sectional view of a first embodiment of a fluid sensor structure.
FIG. 2 is a side elevation cross-sectional view of a second embodiment of a fluid sensor structure.
FIG. 3 is a side elevation cross-sectional view of a third embodiment of a fluid sensor structure.
FIG. 4 is a side elevation cross-sectional view of a fourth embodiment of a fluid sensor structure.
FIG. 5 is a side elevation cross-sectional view of a fifth embodiment of a fluid sensor structure.
FIG. 6 is a top plan view of a first embodiment of a multi-sensor fluid sensor structure.
FIG. 7 is a top plan view of a second embodiment of a multi-sensor fluid sensor structure.
FIG. 8 is a flowchart of an embodiment of a method for fabrication of fluid sensors.

### DETAILED DESCRIPTION OF EMBODIMENTS

For clarity of the description, the drawings are not drawn to a uniform scale. In particular, vertical and horizontal scales may differ from each other and may vary from one drawing to another. In this regard, directional terminology, such as "top," "bottom," "front," "back," "leading," "trailing," etc., is used with reference to the orientation of the drawing figure(s) being described. Because components of the invention can be positioned in a number of different orientations, the directional terminology is used for purposes of illustration and is in no way limiting.

For clarity and simplicity of descriptions, the embodiments of fluid sensors described herein are generally described in terms of sensing gases. However, the invention is not limited to sensing of gases. The embodiments described may also be used in other applications for sensing of plasmas and other fluids, including liquids. If desired, suitable fluidics structures such as conventional fluidic devices may be added.

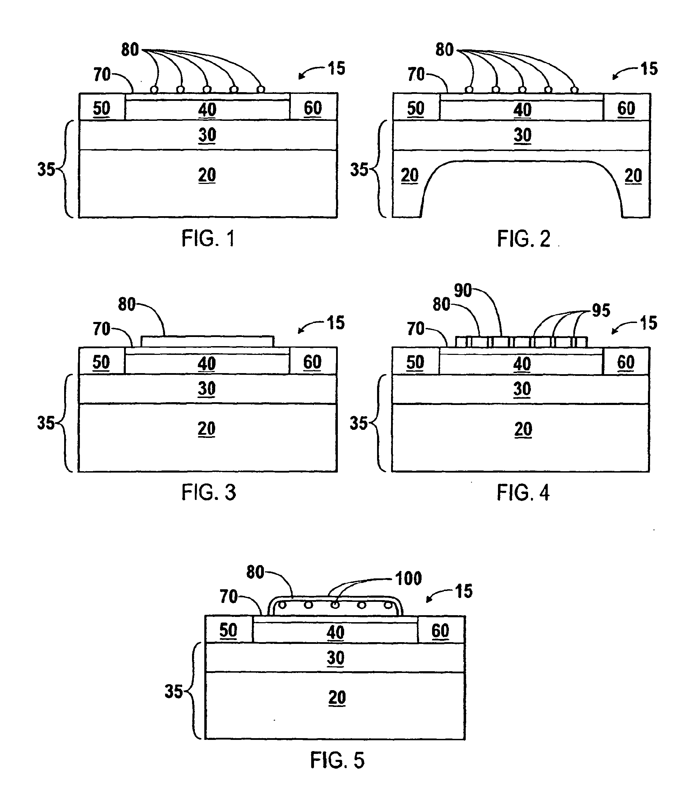

Various embodiments of fluid sensors are described in the following paragraphs with reference to FIGS. 1 - 7. One aspect of the embodiments described herein is a fluid sensor for use in an ambient-temperature environment. The fluid sensor embodiments have a substrate, a field-effect transistor (FET) comprising a functionalized semiconductor nano-wire disposed on the substrate, an integral heater disposed on the substrate near the FET (to heat the FET to an elevated temperature relative to the ambient temperature), and integral thermal insulation disposed to maintain the FET at the elevated temperature. Some embodiments also have one or more integral temperature sensors for determining the temperature of the fluid sensor.

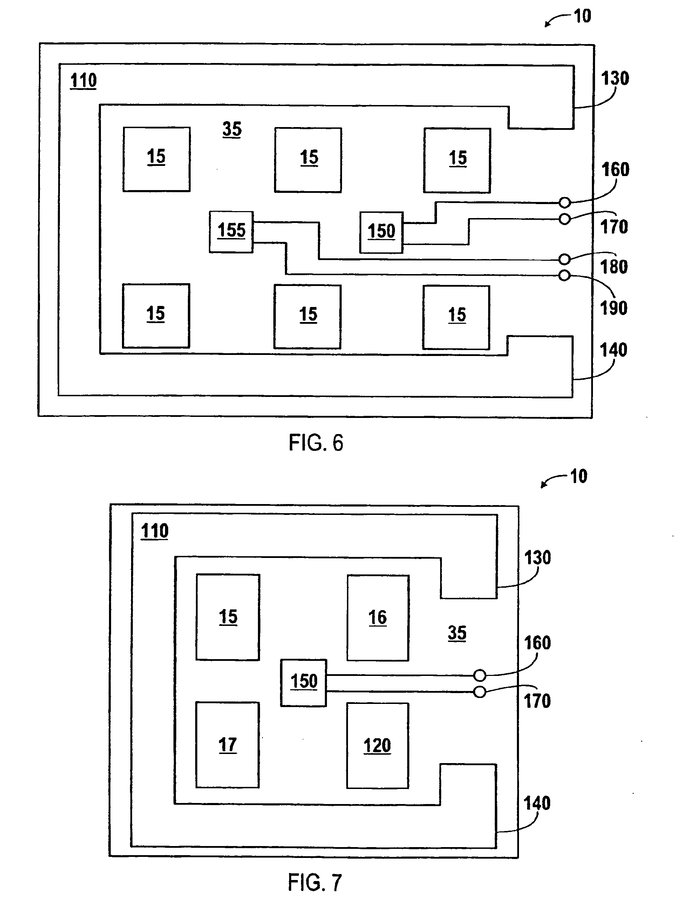

FIG. 1 is a side elevation cross-sectional view of a first embodiment of such a fluid sensor structure. As shown in FIG. 1, the structure has a base substrate **20** supporting the other elements, integral thermal insulation **30** to maintain the FET at an elevated temperature, a field-effect transistor (FET) sensor **15** comprising a functionalized semiconductor nano-wire **40** with conductive source and drain contacts **50** and **60,** and a thin layer of dielectric providing a gate dielectric **70.** Not shown in the cross-sections FIGS. 1 - 5 is an integral heater **110** near the FET (but out of the plane of the cross sections shown) to heat the FET to an elevated temperature relative to the ambient temperature. Integral heaters **110** are shown in FIGS. 6 and 7, described below. Functionalized semiconductor nano-wire **40** may comprise silicon or another semiconductor, formed as a nano-wire by methods described below in the section titled "FABRICATION." Whether the functionalized semiconductor nano-wire comprises silicon or another semiconductor, it may be doped to provide a predetermined desired conductivity type, e.g., P-type, N-type, P+, etc.

Furthermore, functionalized semiconductor nano-wire **40** may also comprise a catalyst **80,** e.g. a metallic catalyst. Examples of suitable catalysts include: platinum, palladium, iridium, rhenium, ruthenium, gold, silver, and mixtures or alloys or compounds thereof; carbon; tungsten, titanium, tin, zinc, and oxides thereof; organometallic compounds containing elements from the group consisting of cobalt, iron, and nickel; and transition metal complexes containing elements from Groups IIIA, IVA, VA, VIA, VIIA, VIIIA, IB, IIB of the Periodic Table of Elements. Thus, specifically, functionalized semiconductor nano-wire **40** may comprise a silicon nano-wire functionalized with a catalyst **80** selected from this list of suitable catalysts or their functional equivalents. In general, any material capable of interacting with fluids to be detected and effecting a change of an electrical characteristic of the field-effect transistor (FET) may be selected as a catalyst **80** for use in embodiments of the invention. The change of an electrical characteristic of the field-effect transistor may be, for example, a change of conductance, capacitance, frequency response, transconductance, gain, carrier concentration, or some other electrical change. Catalyst **80** is shown schematically in FIGS. 1 and 2 by small circles for clarity of illustration, but the catalyst may be a thin film or mesh and may be continuous or discontinuous.

Substrate **20** may be provided in a number or ways, some of which incorporate other elements as part of the substrate itself. For example, in FIG. 1, substrate **20** may comprise a layer of semiconductor on an insulator (SOI). That semiconductor layer may be used to form semiconductor nano-wire **40.** One suitable example of such an SOI substrate is a layer of silicon on an insulator layer **30** comprising silicon oxide. Thus, integral thermal insulation **30** may be a dielectric layer such as silicon oxide, incorporated into the substrate and thus integral to the fluid sensor device. In FIGS. 1 - 5, the combination of base substrate **20** and dielectric layer **30** is designated by reference numeral **35.**

FIG. 2 is a side elevation cross-sectional view of a second embodiment of a fluid sensor structure. The embodiment of FIG. 2 is similar to the embodiment of FIG. 1, except that the embodiment in FIG. 2 has a portion of substrate **20** etched away from the back side to form a thin region at least partially aligned with the active portions of the fluid sensor including the field-effect transistor. The thin region has a lower thermal mass, allowing heating to a desired operating temperature with lower power consumption.

FIG. 3 is a side elevation cross-sectional view of a third embodiment of a fluid sensor structure, with a thin layer of a solid catalyst **80.**

FIG. 4 is a side elevation cross-sectional view of a fourth embodiment of a fluid sensor structure. This embodiment has a porous thin layer **90** of a catalyst **80,** having a number of pores or openings **95,** which may extend through thin layer **90** as shown. Pores **35** also increase the area of a fixed quantity of catalyst and allow easy access for fluids to the field-effect transistor (FET) gate surface. Pores 35 also increase the area/volume ratio of the catalyst.

A fifth embodiment of a fluid sensor structure is shown in FIG. 5, also a side elevation cross-sectional view. In this embodiment, catalyst **80** is formed as a mesh composed of thin wires or filaments **100.** Such a mesh has similar benefits to those of the pores **35** mentioned above. Methods for forming such a mesh are described hereinbelow, in the section titled "FABRICATION."

While particular arrangements of the various elements are shown in the drawings of these embodiments, those skilled in the art will recognize that other arrangements are also operable. The integral thermal insulation may be disposed on the substrate; the integral heater may be disposed on the substrate or on the integral thermal insulation; and the field-effect transistor (FET) may be disposed on the substrate or on the integral thermal insulation, for example. The benefit of reduced power consumption is improved when both the FET and heater are disposed on the integral thermal insulation. In some embodiments, an insulating substrate is the integral thermal insulator.

Individual fluid sensor structures may be combined and integrated in an array, as shown in FIGS. 6 and 7. FIG. 6 is a top plan view of a first embodiment of a multi-sensor fluid sensor structure, and FIG. 7 is a top plan view of a second embodiment of a multi-sensor structure. FIG. 6 shows multi-sensor structure **10** including an array of six sensors **15** on a common surface consisting of a base substrate and a dielectric layer that provides an integral thermal insulator **30.** Integral thermal insulator **30** is shown in FIGS. 1 - 5. To simplify the illustrations, the conventional source, drain, and gate contacts of the FET sensors **15** are not shown in FIGS. 6 and 7. A single integral heater **110** wraps around three sides of the sensor array in this embodiment, powered by electrical current provided through its end contacts **130** and **140.** Two integral temperature sensors **150** and **155** are disposed near sensors **15** for sensing of temperature via their electrical contacts **160, 170, 180,** and **190.** Integral temperature sensors **150** and **155** may be diodes having known temperature-dependent electrical characteristics. The field-effect transistor of each of the various sensors **15** of the array in FIG. 6 may be functionalized for detecting a particular gas. If the application requires detection of a number of gases, the field-effect transistor of each fluid sensor **15** of the array may be functionalized for detecting a distinct gas. Alternatively, the field-effect transistors of a number of the sensors **15** of the array may be functionalized for detecting the same gas. Such a configuration may be useful to provide redundancy for reliability, to provide statistical temperature results for noise reduction and/or other error reduction, etc.

FIG. 7 shows a multi-sensor structure **10** including an array of four sensors **15, 16, 17,** and **120,** on a common composite surface **35** including an integral thermal insulator **30.** Integral thermal insulator **30** is shown in FIGS. 1 - 5. Again, a single integral heater **110** wraps around three sides of the sensor array in this embodiment, powered by electrical current provided through its end contacts 130 and 140. An integral temperature sensor 150 is disposed near sensors 15, 16, 17, and 120 for sensing of temperature through electrical contacts **160** and **170**. In this embodiment, the field-effect transistor of each fluid sensor **15, 16,** and **17** of the array may be functionalized for detecting a distinct gas, and control sensor **120** may be a control device whose field-effect transistor is not functionalized for detecting any gas but is otherwise identical to sensors 15, 16, and 17.

As the section hereinbelow titled "FABRICATION" describes, each of the fluid sensor devices 15 may be fabricated to be "nano-scale," i.e., to have dimensions of less than about one micrometer. Thus, the various embodiments described above provide nano-scale fluid sensors for use in an environment having an ambient temperature. Each fluid sensor, individually or configured in an array, may comprise a nano-scale fluid detector 15 (such as a functionalized nano-scale field-effect-transistor), an integral heater 110 for heating the nano-scale fluid detector, integral thermal insulation for at least the nano-scale fluid detector, and mechanical support for the nano-scale fluid detector, the integral heater, and the integral thermal insulator. The integral heater 110 can heat each nano-scale fluid detector **15** to an elevated temperature relative to the ambient temperature, and the integral thermal insulator 30 can maintain the nano-scale fluid detector 15 at the elevated temperature.

An integral temperature sensor (such as temperature sensors 150 and 155 shown in FIGS. 6 and 7) may be included in the device for allowing control and selection of temperatures for calibration purposes and for setting gas sensitivity. For example, a field-effect transistor **15** using a platinum catalyst **80** may be more sensitive to a gas A and less sensitive to another gas B at 100°C and be more sensitive to gas B and less sensitive to gas A at 200 °C. Thus, by selecting sensor operating temperature in accordance with measurements by an integral temperature sensor, a user may select which fluid to detect. Thus, also, an array of fluid sensors with each individual sensor set at a different temperature can detect a mixture of different fluids. The integral temperature sensor may be formed, for example, by patterning the semiconductor film and forming a junction to make a diode with known temperature-dependent electrical characteristics. To summarize this method of using a fluid sensor that has an integral heater and an integral temperature sensor: the user associates with each of two or more fluids to be sensed a different operating temperature range effective for sensing the fluid to be sensed, senses a temperature of the fluid sensor by operating the integral temperature sensor, and actuates the integral heater to adjust the temperature of the fluid sensor to within a selected operating temperature range, whereby one of the fluids to be sensed is selected for sensing.

In embodiments using silicon as the semiconductor, thermally insulated silicon nano-wire field-effect transistors (SiNW FET's), in which silicon nano-wires (SiNW's) form the FET conducting channels and are thermally insulated by a dielectric film, are transformed into sensitive and low-power fluid sensors by functionalizing silicon nano-wires with selective catalytic nano-particles or thin films. Chemisorption of gas molecules on the resulting SiNW/catalyst surface at elevated temperatures (for example, 100° - 200° C) changes the conductance of SiNW's due to the field effect of charged adsorbates which are detected. While reference is made herein to a theory of operation related to chemisorption effects, the invention should not be construed as being limited to the consequences of such a theory or of any particular theory of operation. The large surface area/volume ratio of nano-wires leads to increased sensitivity and faster response time, yet their small volume along with their thermal isolation leads to lower power consumption required for heating. In addition to SiNW FET devices, silicon-based resistors and diodes may conveniently be used on each sensor chip to locally heat SiNW's and monitor their temperatures. Moreover, SiNW FET's are amenable to high density array-based sensing which allows multiple gases to be detected simultaneously by functionalizing each SiNW with different catalytic metals or by operating each SiNW FET at different temperatures. In general, a catalyst-functionalized SiNW FET sensor is a versatile platform for multiplexed, highly sensitive, and low-power fluid sensing, and can be mass-produced at low cost by semiconductor fabrication technology, as is described hereinbelow.

As an example, in operation for gas sensing, the nano-wires are heated to the desired temperature (for example, 100° - 200° C) and are exposed to the gases. A catalyst on the nano-wire selectively facilitates the adsorption and decomposition of a specific gas on the Si nano-wire. These adsorbates have a field effect on Si nano-wires and will change their conductance. The selectivity of gas sensing is determined by the catalysts coated on Si nano-wires, and/or the operating temperature of nano-wire FETs, which can be individually selected for each nano-wire FET in a multiplex sensor array.

This utilization of Si nano-wire field-effect transistors fabricated by semiconductor fabrication processes allows low-cost manufacturing of multiplex, highly sensitive and low power-consumption fluid sensors. In particular, silicon nano-wire FET's serve as versatile platforms for various fluid sensors customized by functionalizing nano-wires with various catalyst substances.

### FABRICATION

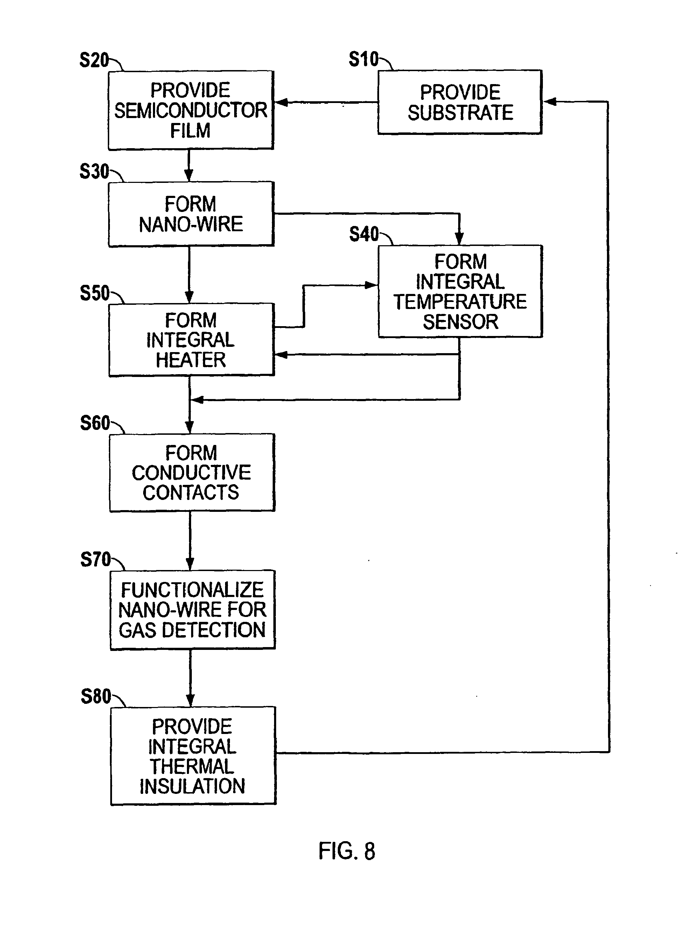

Another aspect of the invention is a method of fabricating a fluid sensor. An embodiment of such a fluid-sensor fabrication method is illustrated by the flowchart shown in FIG. 8. Various steps of the method are designated by reference numerals **S10, S20, S30,** ..., **S80.** These reference numerals do not imply a fixed sequence in which the steps must be performed, since various sequences of steps are possible, including those indicated in the conventional manner by arrows shown connecting the steps of FIG. 8. Some steps may also be combined with others and/or performed simultaneously with other steps. As shown in FIG. 8, the method includes a step **S10** of providing a substrate. The substrate provided may be a smooth, flat insulating substrate. In step **S20,** a semiconductor film is provided. Step **S20** may be performed by depositing on the substrate a thin film of silicon, for example. If a semiconductor film such as silicon is deposited on an insulating substrate, steps **S10** and **S20** together provide a semiconductor-on-insulator (SOI) substrate. That operation may also incorporate step **S80,** described below.

In step **S30,** a nano-wire is formed by patterning the semiconductor film, using techniques of nano-lithography known to those skilled in the semiconductor art, e.g., nano-imprint lithography, electron-beam lithography, ion-beam lithography, deep-UV lithography, and X-ray lithography. In step **S50,** an integral heater is formed by patterning the semiconductor film and optionally doping the portion of semiconductor patterned to provide a desired resistivity. An integral temperature sensor may be formed in step **S40,** for example by patterning the semiconductor film and forming a junction to make a diode with known temperature-dependent electrical characteristics. Many detailed methods for formation of diodes in semiconductors are well-known to those skilled in the art. Steps **S40** and **S50** may be combined and performed simultaneously, and either or both of these steps may be combined and performed simultaneously with step **S30** of forming the nano-wire. In step **S60,** conductive source and drain contacts are formed in electrical contact with the nano-wire, thereby combining the source and drain contacts with the semiconductor nano-wire to form a field-effect transistor (FET). Alternative methods of adding a gate to that FET are discussed below. Steps **S40** and **S50** of forming conductive source and drain contacts and forming an integral heater may also be performed using a nano-lithography method such as nano-imprint lithography, electron-beam lithography, ion-beam lithography, and X-ray lithography. As indicated by arrows in FIG. 8, the sequence followed in forming the integral heater and optionally forming the integral temperature sensor may be varied.

In step **S70,** the nano-wire is functionalized for detection of at least one fluid. While the example of FIG. 8 refers to a gas, the nano-wire may be functionalized for detection of a non-gaseous fluid. Step **S70** of functionalizing the nano-wire may be performed by forming a thin gate dielectric on the nano-wire if necessary and depositing a quantity of catalyst on the nano-wire thus prepared. A native oxide on the nano-wire may obviate the need to take steps to form a gate dielectric. Otherwise, many methods of forming a thin gate dielectric are known to those skilled in semiconductor fabrication: e.g., the methods of growing a thin thermal oxide (SiO₂) or depositing a thin layer of SiO₂, Si₃N₄, Al₂O₃, Ta₂O₅, or another suitable oxide or nitride on the nano-wire.

In step **S70,** the catalyst may be deposited from colloidal solution or may be deposited by vacuum evaporation or sputtering.

The catalyst **80** employed in step **S70** may be a metallic catalyst, but is not limited to metallic catalysts. The catalyst may be one of the following or the functional equivalents of any of these catalysts, for example: platinum, palladium, iridium, rhenium, ruthenium, gold, silver, and mixtures or alloys or compounds of these elements; carbon; tungsten, titanium, tin, zinc, and their oxides; organometallic compounds containing elements from the group cobalt, iron, or nickel; or transition metal complexes containing elements from Groups IIIA, IVA, VA, VIA, VIIA, VIIIA, IB, IIB of the Periodic Table of Elements. More generally, any material capable of interacting with gases to be analyzed and effecting a change of an electrical characteristic of the FET may be selected as a catalyst **80** and employed in step **S70.**

In step **S80,** integral thermal insulation is provided (disposed to maintain the field-effect transistor at an elevated temperature relative to the ambient temperature of the fluid sensor). It should be noted that, by providing a semiconductor-on-insulator (SOI) substrate, e.g., an SOI wafer, steps **S10, S20,** and **S80** of FIG. 8 may be combined and performed simultaneously. The insulator of the SOI wafer provides the integral thermal insulator. The semiconductor film of the SOI wafer provides the material to be patterned in step **S30** to form a nano-wire. As an example of an SOI wafer, a planar silicon wafer having a predetermined conductivity type has a layer of silicon oxide having a thickness of about 200 nanometers (about 2,000 Angstroms), covered by a thin layer (e.g., about 30 to 500 nanometers) of single-crystal or polycrystalline silicon. When such a structure is used, the planar silicon wafer under the insulating layer may serve as the gate of the FET. This may be referred to as a "back-gate" FET structure. Alternatively, the metal catalyst may serve as the FET gate, being connected to an external contact in a conventional manner for that purpose and being electrically insulated from the substrate. Thus, the functionalized semiconductor nano-wire may include a conductive catalyst electrically insulated from the substrate to provide a gate for the FET. In other embodiments, a separate small patterned conductive gate electrode (not shown) may be formed on a portion of the nano-wire (e.g., on a portion of its top gate-insulator surface) and extending to an external contact.

Not shown in FIG. 8 is an optional step of removing at least a portion of the substrate under the field-effect transistor (FET), e.g., by etching the back side of the substrate to form an opening at least partially aligned opposite the field-effect transistor (FET), thereby thinning the substrate locally as shown in FIG. 2. Such thinning reduces the mass of material to be heated and reduces power consumption of the integral heater.

In the embodiment shown in FIG. 5, catalyst **80** is formed as a mesh composed of thin wires or filaments **100.** Such mesh structures may be formed, for example by depositing a thin film of catalyst material, using resist and lithography to form a mask defining the pattern of the mesh wires 100, directionally etching the pattern, and isotropically etching to selectively "undercut" the catalyst mesh. Alternatively, other methods known to those skilled in the art may be used to form a catalyst mesh.

Thus, another aspect of the invention is a fabrication method specially adapted to fabricate the fluid sensor in one of the structural embodiments described above or their functional equivalents. The fluid sensor or array of such fluid sensors thus fabricated may be made as an integrated circuit.

The nano-wire FET's are fabricated by methods using steps commonly used in standard silicon semiconductor fabrication technology. In such embodiments, the FET's consist of doped Si nano-wire as a conducting channel, and two conductive electrodes connected to the nano-wire as the source and drain electrodes of the FET. Silicon nano-wires may be conveniently fabricated from silicon-on-insulator (SOI) wafers using nano- lithography and Si etching. Silicon nano-wires are electrically and thermally insulated by the buried oxide of SOI wafers. A thin layer of a gate dielectric such as oxide or nitride is formed on the silicon nano-wire. On the gate dielectric material, a catalyst (such as Pt, Pd, Ir, etc.) in the form of nano-particles or thin film is deposited. Arrays of such nano-wire FET's may be fabricated and each nano-wire may have its own unique catalyst functionalization for specific gas sensing. Each fluid sensor may also have its own integral nano-scale heater and its own integral nano-scale temperature sensor.

### INDUSTRIAL APPLICABILITY

Devices made in accordance with the invention are useful in detecting gases in an environment while having both high sensitivity and low power consumption. Various embodiments of the fluid sensor including fluid-sensor arrays may be used in applications that require detection of various gases, applications that require a heated sensor, applications that require integral temperature sensing, applications that require redundancy of sensors, applications that require a control device insensitive to gas, or applications that require sensing of fluids over a region of an array. The fabrication methods described are useful in being specially adapted to make structural embodiments of the fluid sensors described herein.

## Claims

1. A fluid sensor for use in an environment having an ambient temperature, the fluid sensor comprising:
a) a field-effect transistor (FET) (15) comprising a functionalized semiconductor nano-wire (40), and **characterised by**:
b) an integral heater (110) disposed proximate to the field-effect transistor (15) to heat the field-effect transistor (15) to an elevated temperature relative to the ambient temperature, and
c) integral thermal insulation (30) disposed to maintain the field-effect transistor (15) at the elevated temperature.

2. The fluid sensor of claim 1, wherein the functionalized semiconductor nano-wire (40) comprises silicon doped to provide a predetermined conductivity type.

3. The fluid sensor of claim 1 or 2, wherein the functionalized semiconductor nano-wire (40) comprises a catalyst capable of interacting with a fluid to be sensed and effecting a change of an electrical characteristic of the field-effect transistor (FET).

4. The fluid sensor of claim 3, wherein the catalyst is a material selected from the list consisting of platinum, palladium, iridium, rhenium, ruthenium, gold, silver, and mixtures or alloys or compounds thereof; carbon; tungsten, titanium, tin, zinc, and oxides thereof; organometallic compounds containing elements from the group consisting of cobalt, iron, and nickel; and transition metal complexes containing elements from Groups IIIA, IVA, VA, VIA, VIIA, VIIIA, IB, IIB of the Periodic Table of Elements.

5. The fluid sensor of claim 1, wherein the integral heater (110) is disposed on the integral thermal insulation (30).

6. The fluid sensor of claim 1, further comprising a substrate (20) for supporting the field-effect transistor (15), wherein the field-effect transistor (15) and the substrate (20) are formed from a layer of silicon on an insulator (SOI).

7. The fluid sensor of claim 6, wherein the integral thermal insulation (30) and the integral heater (110) are disposed on the substrate (20).

8. The fluid sensor of claim 6, wherein the substrate (20) serves as a gate for the field-effect transistor (15).

9. The fluid sensor of any of claims 1-8, further comprising at least one integral temperature sensor (150, 155) disposed proximate to the field-effect transistor (15) for determining the temperature thereof.

10. A method for fabricating a fluid sensor, the method comprising the steps of:
a) providing an insulating substrate (20),
b) depositing a layer of silicon on the insulating substrate (20) to form a silicon-on-insulator (SOI) substrate,
c) patterning the layer of silicon to form at least one silicon nano-wire (40),
d) forming conductive source and drain contacts, thereby combining the source and drain contacts with the semiconductor nano-wire (40) to form a field-effect transistor (15),
e) functionalizing the at least one silicon nano-wire (40) for detection of at least one fluid, and **characterised by**:
f) patterning the layer of silicon to form at least one integral heater resistor (110), and
g) depositing thermal insulation (30) disposed to maintain the field-effect transistor (15) at an elevated temperature relative to the ambient temperature of the fluid sensor.

## Patentansprüche

1. Ein Fluidsensor zur Verwendung in einer Umgebung, die eine Umgebungstemperatur aufweist, wobei der Fluidsensor folgende Merkmale aufweist:
a) einen Feldeffekttransistor (FET) (15), der einen funktionalisierten Halbleiter-Nanodraht (10) aufweist, und **gekennzeichnet ist durch**:
b) eine integrale Heizvorrichtung (110), die in der Nähe des Feldeffekttransistors (15) angeordnet ist, um den Feldeffekttransistor (15) auf eine erhöhte Temperatur relativ zu der Umgebungstemperatur zu erhitzen; und
c) eine integrale Wärmeisolierung (30), die angeordnet ist, um den Feldeffekttransistor (15) bei der erhöhten Temperatur zu halten.

2. Der Fluidsensor gemäß Anspruch 1, bei dem der funktionalisierte Halbleiter-Nanodraht (40) Silizium umfasst, das dotiert ist, um einen vorbestimmten Leitfähigkeitstyp zu liefern.

3. Der Fluidsensor gemäß Anspruch 1 oder 2, bei dem der funktionalisierte Halbleiter-Nanodraht (40) einen Katalysator umfasst, der in der Lage ist, mit einem zu erfassenden Fluid zu interagieren und eine Änderung einer elektrischen Eigenschaft des Feldeffekttransistors (FET) zu bewirken.

4. Der Fluidsensor gemäß Anspruch 3, bei dem der Katalysator ein Material ist, das aus der Liste ausgewählt ist, die aus Platin, Palladium, Iridium, Rhenium, Ruthenium, Gold, Silber und Gemischen oder Legierungen oder Verbindungen derselben; Kohlenstoff; Wolfram, Titan, Zinn, Zink und Oxiden derselben; metallorganischen Verbindungen, die Elemente aus der aus Kobalt, Eisen und Nickel bestehenden Gruppe enthalten; und Übergangsmetallkomplexen, die Elemente aus den Gruppen IIIA, IVA, VA, VIA, VIIA, VIIIA, IB, IIB der Tabelle des Periodensystems der Elemente enthalten, besteht.

5. Der Fluidsensor gemäß Anspruch 1, bei dem die integrale Heizvorrichtung (110) auf der integralen Wärmeisolierung (30) angeordnet ist.

6. Der Fluidsensor gemäß Anspruch 1, der ferner ein Substrat (20) zum Tragen des Feldeffekttransistors (15) umfasst, wobei der Feldeffekttransistor (15) und das Substrat (20) aus einer Schicht aus Silizium auf einem Isolator (SOI) gebildet sind.

7. Der Fluidsensor gemäß Anspruch 6, bei dem die integrale Wärmeisolierung (30) und die integrale Heizvorrichtung (110) auf dem Substrat (20) angeordnet sind.

8. Der Fluidsensor gemäß Anspruch 6, bei dem das Substrat (20) als Gate für den Feldeffekttransistor (15) dient.

9. Der Fluidsensor gemäß einem der Ansprüche 1 bis 8, der ferner zumindest einen integralen Temperatursensor (150, 155) umfasst, der in der Nähe des Feldeffekttransistors (15) angeordnet ist, um dessen Temperatur zu bestimmen.

10. Ein Verfahren zum Herstellen eines Fluidsensors, wobei das Verfahren folgende Schritte umfasst:
a) Bereitstellen eines isolierenden Substrats (20),
b) Aufbringen einer Siliziumschicht auf das isolierende Substrat (20), um ein Silizium-auf-Isolator-Substrat (SOI-Substrat) zu bilden,
c) Strukturieren der Siliziumschicht, um zumindest einen Silizium-Nanodraht (40) zu bilden,
d) Bilden von leitfähigen Source- und Drain-Kontakten, **dadurch** Kombinieren der Source- und Drain-Kontakte mit dem Halbleiter-Nanodraht (40), um einen Feldeffekttransistor (15) zu bilden,
e) Funktionalisieren des zumindest einen Silizium-Nanodrahtes (40) zur Erfassung zumindest eines Fluids, und **gekennzeichnet durch**:
f) Strukturieren der Siliziumschicht, um zumindest einen integralen Heizwiderstand (110) zu bilden, und
g) Aufbringen der angeordneten Wärmeisolierung (30), um den Feldeffekttransistor (15) auf einer erhöhten Temperatur relativ zu der Umgebungstemperatur des Fluidsensors zu halten.

## Revendications

1. Capteur de fluides pour une utilisation dans un environnement à température ambiante, le capteur de fluides comprenant :
a) un transistor à effet de champ (FET) (15) comprenant un nanofil semiconducteur fonctionnalisé (10), et **caractérisé par** :
b) un dispositif de chauffage intégré (110) disposé à proximité du transistor à effet de champ (15) pour chauffer le transistor à effet de champ (15) à une température élevée par rapport à la température ambiante, et
c) un isolant thermique intégré (30) disposé pour maintenir le transistor à effet de champ (15) à la température élevée.

2. Capteur de fluides selon la revendication 1, dans lequel le nanofil semiconducteur fonctionnalisé (40) comprend du silicium dopé pour assurer un type de conductivité prédéterminé.

3. Capteur de fluides selon la revendication 1 ou 2, dans lequel le nanofil semiconducteur fonctionnalisé (40) comprend un catalyseur capable d'interagir avec un fluide à détecter et d'effectuer une modification d'une caractéristique électrique du transistor à effet de champ (FET).

4. Capteur de fluides selon la revendication 3, dans lequel le catalyseur est un matériau choisi dans la liste consistant en le platine, le palladium, l'iridium, le rhénium, le ruthénium, l'or, l'argent, et leurs mélanges ou alliages ou composés ; le carbone ; le tungstène, le titane, l'étain, le zinc et leurs oxydes ; les composés organométalliques contenant des éléments du groupe constitué par le cobalt, le fer et le nickel ; et les complexes de métal de transition contenant des éléments des groupes IIIA, IVA, VA, VIA, VIIA, VIIIA, IB, IIB du tableau périodique des éléments.

5. Capteur de fluides selon la revendication 1, dans lequel le dispositif de chauffage intégré (110) est disposé sur l'isolant thermique intégré (30).

6. Capteur de fluides selon la revendication 1, comprenant en outre un substrat (20) pour supporter le transistor à effet de champ (15), dans lequel le transistor à effet de champ (15) et le substrat (20) sont formés à partir d'une couche de silicium sur un isolant (SOI).

7. Capteur de fluides selon la revendication 6, dans lequel l'isolant thermique intégré (30) et le dispositif de chauffage intégré (110) sont disposés sur le substrat (20).

8. Capteur de fluides selon la revendication 6, dans lequel le substrat (20) remplit la fonction de grille pour le transistor à effet de champ (15).

9. Capteur de fluides selon l'une quelconque des revendications 1 à 8, comprenant en outre au moins un capteur de température intégré (150, 155) disposé à proximité du transistor à effet de champ (15) pour déterminer sa température.

10. Procédé de fabrication d'un capteur de fluides, le procédé comprenant les étapes consistant à :
a) fournir un substrat isolant (20),
b) déposer une couche de silicium sur le substrat isolant (20) pour former un substrat en silicium sur isolant (SOI),
c) tracer un motif sur la couche de silicium pour former au moins un nanofil en silicium (40),
d) former des contacts de source et de drain conducteurs, combinant ainsi les contacts de source et de drain avec le nanofil semiconducteur (40) pour former un transistor à effet de champ (15),
e) fonctionnaliser le au moins un nanofil en silicium (40) pour la détection d'au moins un fluide, et **caractérisé par** :
f) le traçage d'un motif sur la couche de silicium pour former au moins une résistance chauffante intégrée (110), et
g) le dépôt d'un isolant thermique (30) disposé pour maintenir le transistor à effet de champ (15) à une température élevée par rapport à la température ambiante du capteur de fluides.
